# FASCICULE DE BREVET EUROPEEN

(11) **EP 1 472 680 B1**
(45) Date de publication et mention de la délivrance du brevet: **01.08.2007**
(21) Numéro de dépôt: 02799116.5
(22) Date de dépôt: 24.12.2002
(51) Int. Cl.: G11B 5/31

(54) **TETE MAGNETIQUE INTEGREE POUR L'ENREGISTREMENT MAGNETIQUE ET PROCEDE DE FABRICATION DE CETTE TETE MAGNETIQUE**
INTEGRIERTER MAGNETKOPF FÜR MAGNETAUFZEICHNUNG UND HERSTELLUNGSVERFAHREN
INTEGRATED MAGNETIC HEAD FOR MAGNETIC RECORDING AND METHOD FOR MAKING SAME

(30) Priorité: 28.12.2001 FR 0117013
(43) Date de publication de la demande: 03.11.2004
(73) Titulaire: COMMISSARIAT A L'ENERGIE ATOMIQUE, 75015 Paris (FR)
(72) Inventeur: FIEVRE, Michael, F-38000 Grenoble (FR); ALBERTINI, Jean-Baptiste, F-38920 Crolles (FR); GAUD, Pierre, F-38500 Coublevie (FR); SIBUET, Henri, F-38120 Le Fontanil (FR)
(74) Mandataire: Poulin, Gérard
(86) Numéro de dépôt international: PCT/FR2002/004556
(87) Numéro de publication internationale: WO 2003/056548

(56) Documents cités:
- WO-A-01/71714
- US-A- 5 167 062
- US-A- 5 296 992
- US-A- 5 777 824
- PATENT ABSTRACTS OF JAPAN vol. 2000, no. 13, 5 février 2001 (2001-02-05) -& JP 2000 276703 A (MITSUMI ELECTRIC CO LTD), 6 octobre 2000 (2000-10-06)
- PATENT ABSTRACTS OF JAPAN vol. 013, no. 057 (P-825), 9 février 1989 (1989-02-09) -& JP 63 247904 A (MATSUSHITA ELECTRIC IND CO LTD), 14 octobre 1988 (1988-10-14)
- PATENT ABSTRACTS OF JAPAN vol. 1995, no. 10, 30 novembre 1995 (1995-11-30) & JP 07 182628 A (HITACHI LTD), 21 juillet 1995 (1995-07-21)
- PATENT ABSTRACTS OF JAPAN vol. 014, no. 233 (P-1049), 17 mai 1990 (1990-05-17) & JP 02 056712 A (FUJI PHOTO FILM CO LTD), 26 février 1990 (1990-02-26)

## Description

### DOMAINE TECHNIQUE

La présente invention concerne une tête magnétique intégrée pour l'enregistrement magnétique ainsi qu'un procédé de fabrication de cette tête magnétique intégrée.

L'invention concerne en particulier des têtes magnétiques intégrées, fabriquées par une technique de couches minces, pour l'enregistrement magnétique hélicoïdal sur bandes.

L'invention s'applique principalement à la vidéo grand public ou professionnelle (magnétoscopes de salon, caméscopes) ainsi qu'aux enregistreurs informatiques. D'autres domaines d'application sont les mémoires de masse informatiques (micro-informatique, stations de travail et gros systèmes) et le stockage de données sur bandes ou disques pour d'autres applications grand public (multimédia, photo, audio par exemple).

### ETAT DE LA TECHNIQUE ANTERIEURE

Des têtes magnétiques à couches minces sont connues par les documents US 5777624 A et US 5296992 A. Les supports (en anglais "média") d'enregistrement magnétique, destinés aux mémoires de masse (vidéo, audio ou informatique), comprennent de nombreuses pistes sur lesquelles sont inscrites des informations sous la forme de domaines magnétiques. Pour augmenter la densité des informations, on augmente leur nombre par unité de surface.

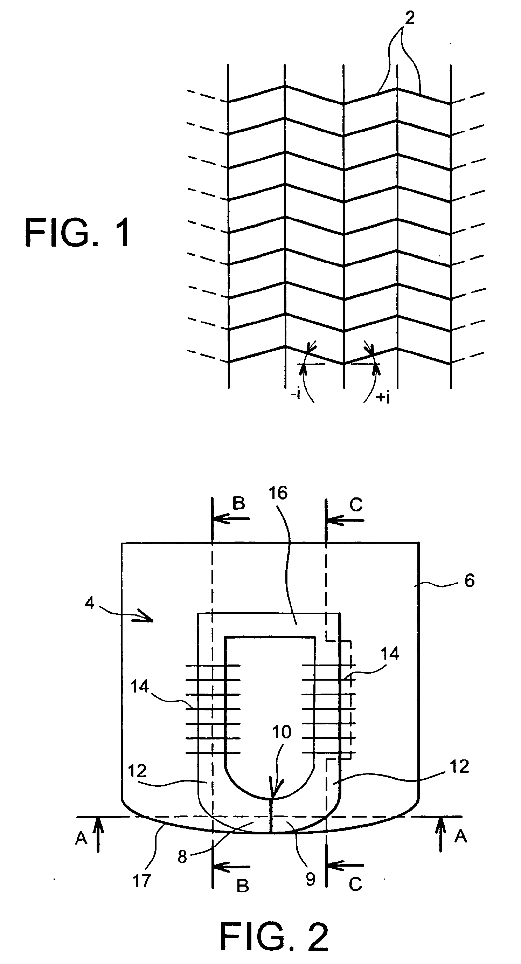

Pour ce faire, on diminue la largeur des pistes et, simultanément, l'intervalle séparant ces pistes jusqu'à rendre ces dernières jointives comme par exemple dans le standard d'enregistrement hélicoïdal. Ceci est schématiquement illustré par la figure 1 où l'on voit des pistes jointives 2.

On utilise de préférence deux têtes magnétiques, dont les azimuts sont non nuls et différents l'un de l'autre, pour écrire et pour lire deux pistes jointives, afin d'éviter les problèmes de diaphonie entre les pistes. Dans l'exemple de la figure 1, ces azimuts ou inclinaisons valent respectivement +i et -i, avec i différent de 0°. Les bits sont donc inscrits suivant les deux angles opposés +i et -i.

La largeur de piste finale est précisément définie dans chaque norme (par exemple 6,7 µm dans les systèmes appelés "DVC long-play").

Actuellement, les têtes d'enregistrement magnétique qui concernent ce domaine et sont disponibles sur le marché, sont fabriquées par micro-usinage, de manière unitaire, sans bénéficier des avantages des techniques de fabrication collective que l'on utilise en micrélectronique.

Cependant, la réduction actuelle des largeurs de pistes conduit à fabriquer des têtes magnétiques dont les dimensions sont de plus en plus réduites. Ces dimensions atteignent maintenant les limites de la technique de micro-usinage.

Une autre technique de fabrication est décrite dans le document suivant auquel on se reportera :
(1) WO 92/02015, publié le 6 février 1992, "Procédé de réalisation de têtes d'écriture et/ou lecture pour enregistrement magnétique", invention de P. Gaud, H. Sibuet, A. Persico et L. Vieux Rochaz, voir aussi US 5 250 150 A.

Il s'agit d'une technique de fabrication de têtes magnétiques intégrées comportant de préférence un entrefer (en anglais "gap") incliné ou entrefer azimuté.

Précisons dès maintenant que la présente invention apporte des améliorations à la structure de base décrite dans ce document (1).

On rappelle brièvement ci-dessous, en faisant référence aux figures 2 à 5, un exemple d'un procédé décrit dans le document (1).

La figure 2 est une vue de dessus schématique d'une tête magnétique 4 qui est intégrée dans une puce (en anglais "chip") 6 et dont les deux pièces polaires 8 et 9 sont séparées par un entrefer azimuté 10.

La puce 6 est vue après découpe (c'est-à-dire après séparation du substrat dans lequel on l'a fabriquée) et mise en forme de la surface de contact 17 entre la tête magnétique et un support (par exemple une bande) d'enregistrement magnétique.

Sur la figure 2, on voit également la partie supérieure 12 du circuit magnétique de la tête 4 ainsi que les bobinages 14, ou solénoïdes, entourant cette partie supérieure 12 du circuit magnétique. On voit en outre la fermeture arrière 16 du circuit magnétique. Cette fermeture arrière 16 est formée en même temps que les pièces polaires 8 et 9.

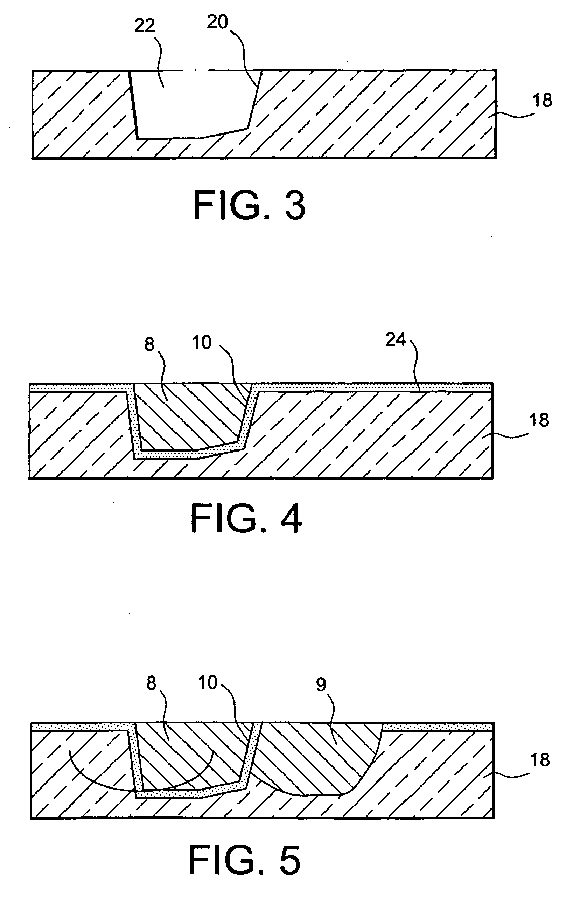

Les figures 3, 4 et 5 sont des vues en coupe schématiques illustrant seulement les principales étapes de fabrication de la tête magnétique 4 conformément à la technique divulguée par le document (1). En particulier, les différents niveaux de masquage ne sont pas précisés.

Le plan de coupe des figures 3 à 5 est noté A-A sur la figure 2. Ces figures montrent respectivement la gravure du premier caisson de la première pièce polaire (figure 3), la constitution de l'entrefer et la mise en place du matériau magnétique du premier caisson (figure 4) et la fabrication de la deuxième pièce polaire (figure 5).

Plus précisément, dans l'exemple considéré, on désire fabriquer une tête intégrée sur du silicium monocristallin avec un entrefer azimuté à 20° par rapport à la verticale. Pour ce faire, on utilise un substrat 18 en silicium monocristallin, orienté <115> et décalé de 0,5°, dans lequel on pratique une gravure anisotrope qui définit le profil de gravure 20 et la cavité 22, ou caisson, que l'on voit sur la figure 3.

Il convient cependant de noter que ce principe peut être utilisé avec tout autre substrat monocristallin, ce qui permet de choisir l'angle d'inclinaison ou angle d'azimut de l'entrefer.

La gravure anisotrope est suivie d'une oxydation thermique qui permet de former l'entrefer 10 de la tête (figure 4). La couche d'oxyde thermique (SiO₂) obtenue a la référence 24. Une fois l'entrefer formé, on remplit la cavité 22 d'un matériau magnétique, d'où la première pièce polaire 8. Ce matériau magnétique peut éventuellement être feuilleté pour remédier au problème des courants de Foucault.

On utilise ensuite une gravure isotrope sélective (qui, dans l'exemple considéré, attaque le silicium mais pas le SiO₂) pour former une autre cavité et l'on remplit cette autre cavité du matériau magnétique comme précédemment. On obtient ainsi la deuxième pièce polaire 9 (figure 5) qui est séparée de la première pièce polaire 8 par l'entrefer azimuté 10.

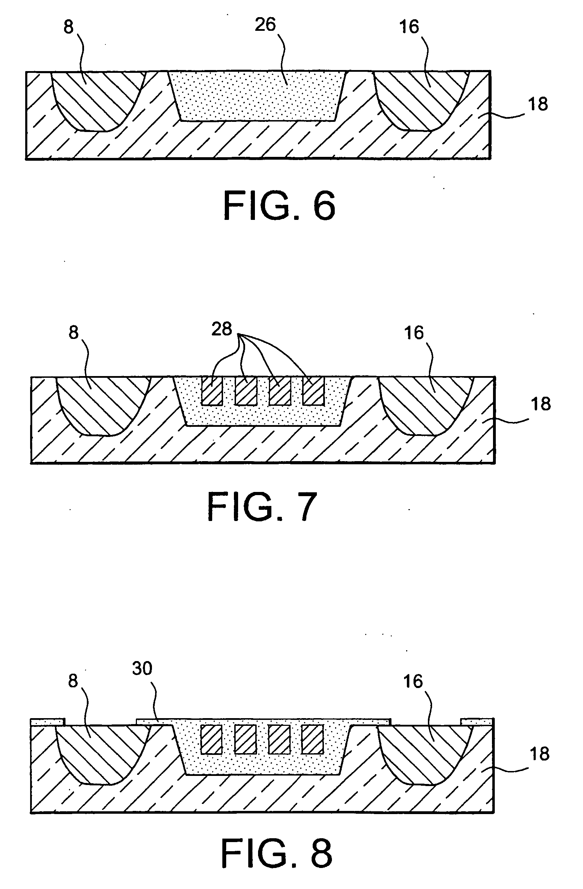

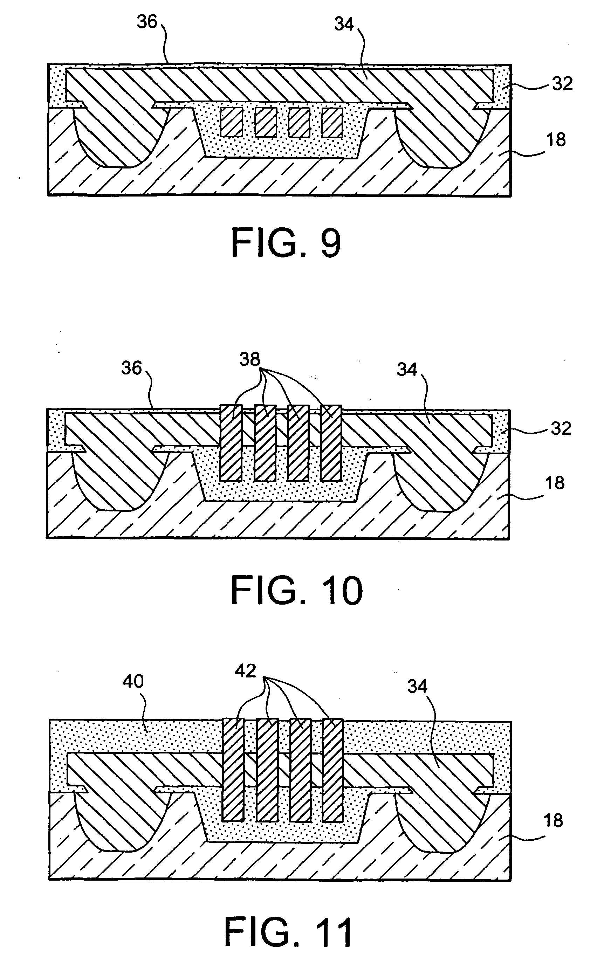

Le point le plus important du document (1) est la fabrication des pièces polaires avec un entrefer azimuté. Cependant une tête intégrée sur du silicium nécessite la fabrication de solénoïdes. Cette fabrication est résumée sur les figures 6 à 11. Le plan de coupe des figures 6 à 9 est noté B-B sur la figure 2 et le plan de coupe des figures 10 et 11 est noté C-C sur cette figure 2.

Ces figures 6 à 11 montrent respectivement la gravure du caisson de bobinage inférieur, son remplissage par du SiO₂ puis sa planarisation (figure 6), la mise en place du bobinage inférieur par gravure et dépôt planarisé d'un métal, par exemple le cuivre (figure 7), la mise en place d'une couche isolante entre le bobinage inférieur et la partie supérieure du circuit magnétique (figure 8), la mise en place de la partie supérieure du circuit magnétique et de l'isolation avec le bobinage supérieur (figure 9), la formation de raccords électriques entre les bobinages inférieurs et supérieurs, par remplissage avec du cuivre, dépôt puis planarisation (figure 10), et la mise en place du bobinage supérieur (figure 11).

Plus précisément, la première étape de fabrication des bobinages ou solénoïdes consiste à graver un caisson dans le substrat 18 en silicium (figure 6). Ce caisson est destiné à accueillir le bobinage inférieur ou niveau inférieur de bobinage. Ce caisson est donc rempli d'un matériau électriquement isolant 26 qui en l'occurrence peut être du SiO₂. Le remplissage s'effectue par dépôt puis planarisation. On voit aussi sur la figure 6 la pièce polaire 8 et la fermeture arrière 16 du circuit magnétique.

Dans le caisson 26 ainsi rempli, on grave ensuite des logements destinés à accueillir le niveau inférieur de bobinage 28 (figure 7). Ces logements sont remplis par dépôt de cuivre puis planarisation. On obtient ainsi le niveau inférieur des conducteurs en cuivre du bobinage de la tête.

Une couche électriquement isolante 30, par exemple en SiO₂, est ensuite déposée sur l'ensemble ainsi obtenu (figure 8) pour former une isolation électrique entre le niveau inférieur de bobinage (les conducteurs ou fils de cuivre) et la partie supérieure du circuit magnétique.

Cette couche isolante 30 est nécessaire car la partie supérieure du circuit magnétique, qui sera finalement entourée par le solénoïde, est constituée d'un matériau magnétique électriquement conducteur.

Ensuite, on dépose une nouvelle couche électriquement isolante 32 en SiO₂ (figure 9) dans laquelle, à l'aide de dépôts et de planarisations, on vient mettre en place la partie supérieure 34 du circuit magnétique. Le tout est ensuite recouvert d'une couche électriquement isolante 36 en SiO₂ qui sert à isoler le circuit magnétique de la partie supérieure du bobinage.

Ensuite, à l'aide de gravures, de dépôts et de planarisations, on forme des raccords électriques 38 en cuivre (figure 10) pour amener le contact électrique en surface. Ensuite, comme on le voit sur la figure 11, un nouveau dépôt 40 de SiO₂, suivi d'une gravure, d'un dépôt puis d'une planarisation, permet de mettre en place le niveau supérieur 42 du bobinage.

La technique divulguée par le document (1) présente des inconvénients.

Le silicium monocristallin est utilisé dans cette technique pour obtenir l'azimut choisi pour l'entrefer. Cependant, les propriétés mécaniques du silicium monocristallin sont insuffisantes pour une utilisation pratique des têtes magnétiques qui en résultent. Le taux d'usure du silicium est en effet trop important.

On essaie donc de remplacer ce matériau dans la zone de contact 17 (figure 2) entre la tête magnétique et le support (par exemple une bande) d'enregistrement magnétique sur lequel on veut écrire ou lire des informations avec cette tête magnétique.

On se reportera aussi au document suivant :
(2) Demande de brevet français N° 0003635 du 22 mars 2000, "Tête magnétique intégrée pour l'enregistrement magnétique hélicoïdal sur bande et son procédé de fabrication", invention de M. Fièvre, J.B Albertini, P. Gaud et H. Sibuet, voir aussi la demande internationale PCT/FR 01/00840 du 21 mars 2001.

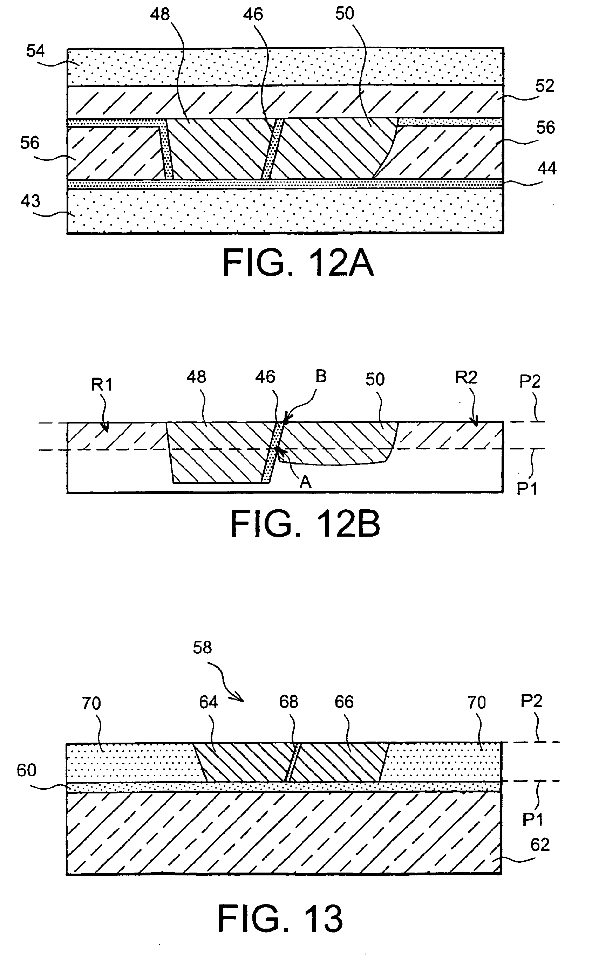

Ce document divulgue l'utilisation de structures SOI ("silicium sur isolant") pour fabriquer des têtes magnétiques intégrées et propose une solution pour remplacer le silicium, au-dessus et au-dessous de l'entrefer, par un matériau plus dur tel que Al₂O₃-TiC par exemple, comme le montre la figure 12A.

Cependant, même en utilisant cette solution, il reste du silicium autour de l'entrefer dans la zone de contact, comme le montre également la figure 12A.

Il convient de noter que cette figure 12A montre une tête magnétique comportant un empilement de couches, de sorte que les expressions "au-dessus", "au-dessous" et "autour" utilisées ci-dessus ont un sens.

Sur cette figure 12A, on voit une tête magnétique comprenant un substrat inférieur 43 fait d'un matériau plus dur que le silicium, une couche 44 par exemple en SiO₂, un entrefer 46 compris entre des première et deuxième pièces polaires 48 et 50, une couche 52, contenant la partie supérieure du circuit magnétique et le bobinage qui entoure ce circuit, et un superstrat 54 pouvant être fait du même matériau que le substrat 43. Le silicium résiduel a la référence 56.

La figure 12B montre une partie de la figure 12A et illustre schématiquement la définition générale de deux plans P1 et P2. Ces plans P1 et P2 sont des plans parallèles, contenant les pièces polaires 48 et 50 de la tête magnétique, et sont définis par des points A et B que l'on voit sur la figure 12B. Ces points A et B définissent la partie du plan 46, commune aux contours des deux pièces polaires 48 et 50. Cette partie du plan 46 est l'entrefer de la tête magnétique.

### EXPOSÉ DE L'INVENTION

La présente invention a pour but de remédier aux inconvénients précédents.

En particulier, l'invention propose une tête magnétique intégrée, à structure en couche mince, dans la zone de contact de laquelle un matériau plus dur que le silicium remplace ce dernier autour de l'entrefer et, de préférence, également au-dessus et au-dessous de cet entrefer, ainsi qu'un procédé de fabrication de cette tête magnétique.

De façon précise, la présente invention a pour objet une tête magnétique intégrée conforme à la revendication 1.

Selon un mode de réalisation particulier de la tête magnétique intégrée objet de l'invention, les pièces polaires sont contenues entre deux plans parallèles de la structure en couche mince, cette structure comprenant au moins entre ces deux plans parallèles, de part et d'autre des pièces polaires, dans le sens de défilement du support d'enregistrement magnétique, un premier matériau plus résistant à l'usure que le silicium.

La présente invention a aussi pour objet une tête magnétique intégrée comprenant une structure en couche mince, cette structure en couche mince contenant, dans la tranche de la structure constituant la face de lecture et/ou d'écriture de la tête magnétique, deux pièces polaires séparées par un entrefer et en alignement longitudinal, ces pièces polaires étant contenues, dans le sens transversal par rapport à la structure, entre deux plans parallèles de la structure en couche mince, cette tête magnétique étant caractérisée en ce qu'elle comprend, au moins dans cette tranche, entre les deux plans parallèles, de part et d'autre des pièces polaires séparées par l'entrefer, un premier matériau R1 plus résistant à l'usure, ce premier matériau étant par exemple plus dur que le matériau du caisson, afin de renforcer la résistance à l'usure de la face de lecture et/ou d'écriture (référence 17 sur la figure 2).

Dans l'invention, l'entrefér peut être droit, c'est à dire sans azimut, mais cet entrefer est de préférence azimuté, c'est-à-dire incliné, pour les raisons mentionnées plus haut.

De préférence, la tête magnétique objet de l'invention comprend en outre deux couches d'un deuxième matériau R2 résistant à l'usure, ce deuxième matériau étant par exemple plus dur que le silicium, et les deux couches encadrent la structure en couche mince, pour renforcer davantage la résistance à l'usure de la face de lecture et/ou d'écriture.

La combinaison des matériaux R1 et R2 pourra être choisie afin de conserver un rayon transversal à la face 17, suffisamment petit pour assurer le meilleur contact des pôles au voisinage de l'entrefer en évitant le phénomène d'aplatissement inhérent à l'usure des têtes (on pourra, par exemple, choisir R1 plus résistant à l'usure que R2).

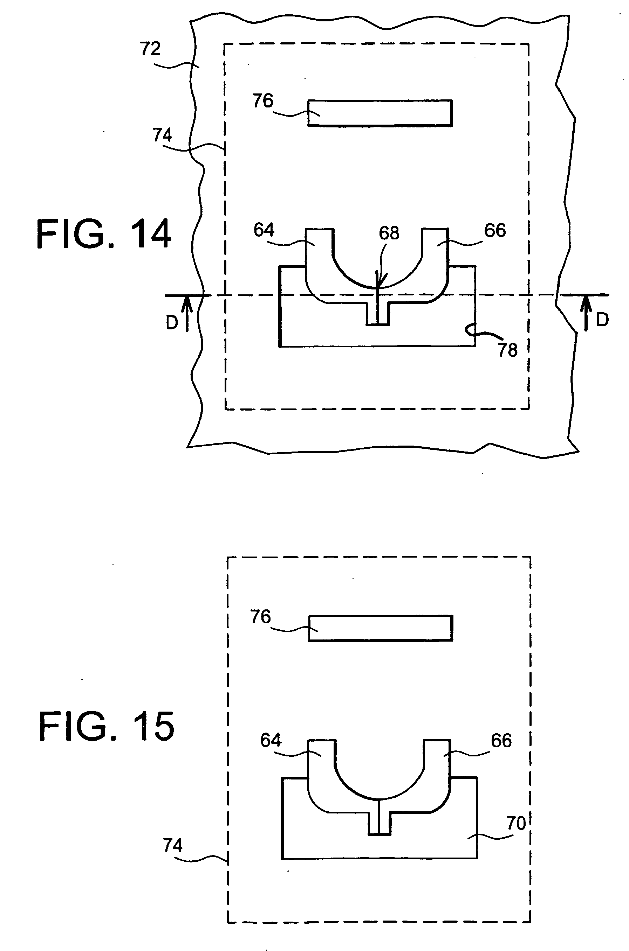

Le choix du deuxième matériaux pourra être fait par rapport au matériau ayant la référence 70 sur la figure 15 des dessins annexés, pour contrôler le rayon transversal de la tête pendant le processus d'usure.

La tête magnétique objet de l'invention peut comprendre également un élément en forme de couche contenant des circuits complémentaires de la tête magnétique, entre la stucture en couche mince et l'une des deux couches du deuxième matériau résistant à l'usure.

Le premier matériau R1 résistant à l'usure peut par exemple être choisi parmi Al₂O₃ et SiO₂.

Le deuxième matériau R2 résistant à l'usure peut être choisi parmi Al₂O₃-TiC, CaTiO₃, ZrO₂, Al₂O₃-SiC, le saphir, SiC ou Si₃N₄.

Selon un mode de réalisation particulier de l'invention, la tête magnétique comprend une couche principale qui encadre la partie active de la tête magnétique, deux couches intermédiaires encadrant cette couche principale et deux couches auxiliaires qui sont faites d'un matériau moins résistant à l'usure que le matériau de la couche principale et qui encadrent les deux couches intermédiaires, ces couches intermédiaires étant faites d'un matériau moins résistant à l'usure que le matériau des couches auxiliaires, de manière à former une .structure ayant une forme apte à permettre un bon contact de la tête avec un support d'enregistrement magnétique pendant toute la durée de vie de cette tête.

La présente invention a également pour objet un procédé de fabrication d'une tête magnétique intégrée, conformément à la revendication 10.

Selon un mode de mise en oeuvre particulier de ce procédé, les pièces polaires sont contenues entre deux plans parallèles de la stucture en couche mince, cette structure comprenant au moins entre ces deux plans parallèles, de part et d'autre des pièces polaires, dans le sens de défilement du support d'enregistrement magnétique, un premier matériau plus résistant à l'usure que le silicium.

La présente invention.a également pour objet un procédé de fabrication d'au moins une tête magnétique intégrée, ce procédé comprenant les étapes suivantes :
- on forme un premier substrat comprenant les première et deuxième pièces polaires, l'entrefer de préférence azimuté, séparant ces première et deuxième pièces polaires, et un élément formant une fermeture arrière de circuit magnétique,
- on forme un premier caisson dans un substrat, autour des première et deuxième pièces polaires séparées par l'entrefer,
- on remplit ce premier caisson du premier matériau R1 plus résistant à l'usure, par exemple plus dur que le silicium,
- on planarise ce premier matériau résistant à l'usure,
- on complète le circuit magnétique, de manière à obtenir un circuit magnétique fermé, incorporant les première et deuxième pièces polaires, l'entrefer et l'élément formant la fermeture arrière de circuit magnétique,
- on forme les bobinages de la tête magnétique, et
- on découpe transversalement la tête magnétique de manière à la séparer du premier substrat et faire apparaître la face de lecture et/ou d'écriture de la tête magnétique.

Selon un mode de mise en oeuvre particulier du procédé objet de l'invention, le premier matériau R1 résistant à l'usure est du SiO₂.

Dans ce cas, selon un mode de mise en oeuvre préféré du procédé objet de l'invention,
- on forme simultanément, dans le premier substrat, le premier caisson et un deuxième caisson permettant la formation des bobinages de la tête magnétique,
- on remplit simultanément ces premier et deuxième caissons avec le premier matériau résistant à l'usure et
- on planarise simultanément le premier matériau remplissant le premier caisson et le premier matériau remplissant le deuxième caisson.

Selon un mode de mise en oeuvre particulier de l'invention, le premier substrat comprend un substrat auxiliaire, une couche d'arrêt de gravure sur ce substrat auxiliaire et une couche mince d'un matériau monocristallin, d'orientation appropriée, sur la couche d'arrêt de gravure, et l'on forme dans cette couche mince, par gravure de cette dernière, les première et deuxième pièces polaires, l'entrefer ainsi que le premier caisson.

De préférence, le substrat auxiliaire est en silicium , la couche d'arrêt en SiO₂ et la couche mince en silicium monocristallin.

Selon un mode de mise en oeuvre particulier de l'invention,
- on élimine le substrat auxiliaire pour faire apparaître la couche d'arrêt de gravure,
- on fixe, sur la face libre de la couche mince, une autre couche permettant de compléter la formation des bobinages de la tête magnétique,
- on fixe, respectivement sur cette autre couche et sur la couche d'arrêt de gravure, des première et deuxième couches d'un deuxième matériau plus résistant à l'usure que le silicium, et
- on découpe ensuite transversalement la tête magnétique.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue schématique d'un support d'enregistrement magnétique connu, à pistes jointives, et a déjà été décrite,
- la figure 2 est une vue de dessus schématique d'une tête magnétique connue, à entrefer azimuté, et a déjà été décrite,
- les figures 3 à 5 sont des vues en coupe schématiques, illustrant les principales étapes de fabrication de la tête magnétique de la figure 2, et ont déjà été décrites,
- les figures 6 à 11 sont des vues en coupe schématiques, illustrant des étapes de fabrication de solénoïdes de la tête magnétique de la figure 2, et ont déjà été décrites,
- la figure 12A est une vue schématique de la zone de contact d'une autre tête magnétique connue, et a déjà été décrite,
- la figure 12B illustre schématiquement la définition de plans parallèles contenant les pièces polaires d'une tête magnétique et a déjà été décrite,
- la figure 13 est une vue schématique sur la tranche d'un mode de réalisation particulier de la tête magnétique objet de l'invention en cours de fabrication,
- la figures 14 à 16 sont des vues de dessus schématiques illustrant des étapes d'un procédé de fabrication de la tête magnétique de la figure 13,

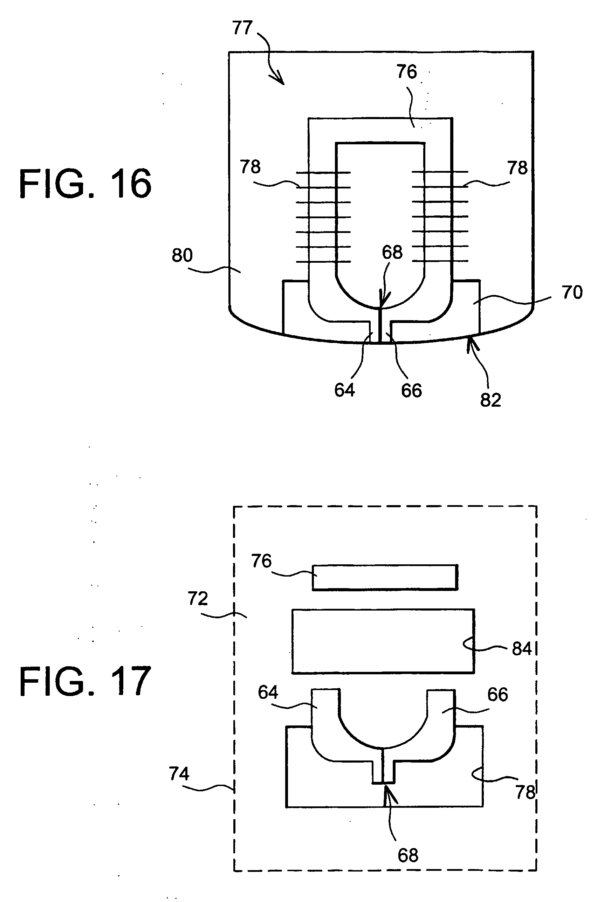

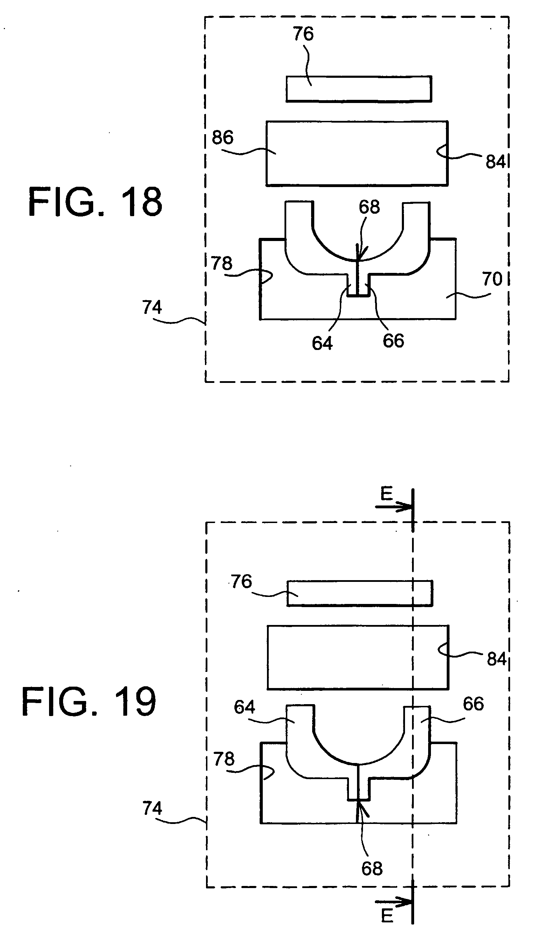

- les figures 17 et 18 sont des vues de dessus schématiques illustrant des étapes d'un procédé de fabrication de la tête magnétique de la figure 13, dans le cas où l'on utilise la silice en tant que matériau résistant à l'usure,
- la figure 19 est une vue de dessus schématique d'une tête magnétique conforme à l'invention, en cours de fabrication,

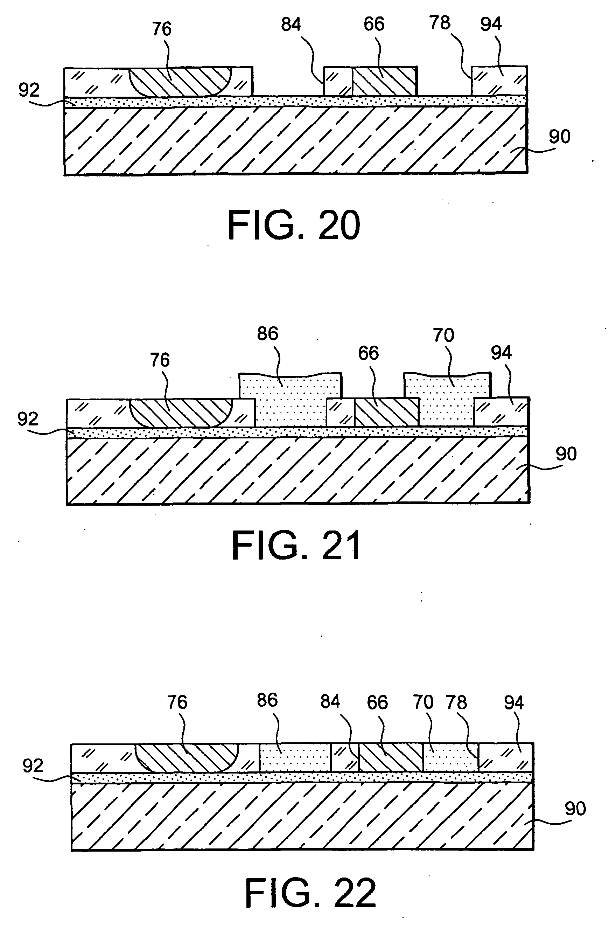

- les figures 20 à 22 sont des vues en coupe schématiques, illustrant des étapes de fabrication de la tête magnétique de la figure 19,

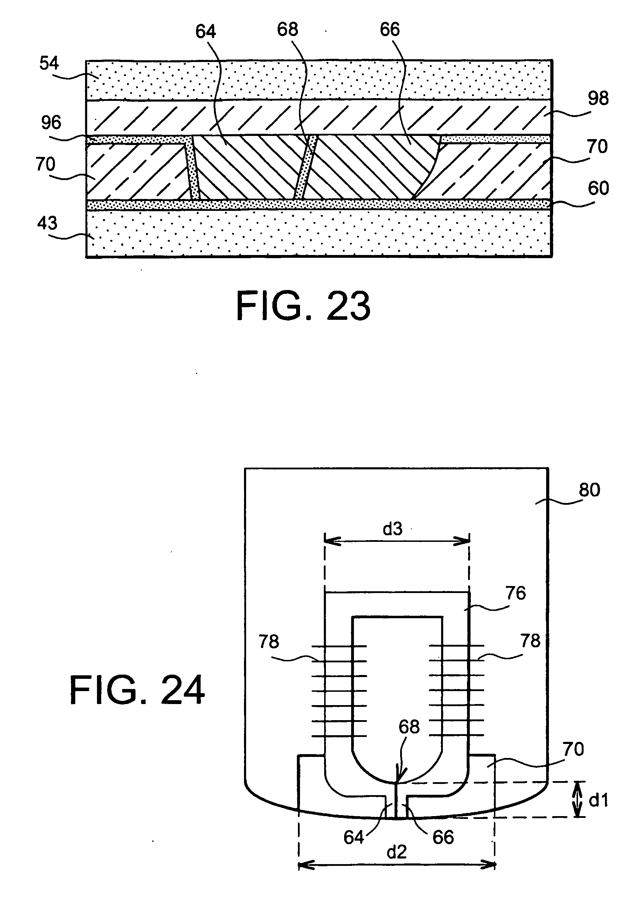

- la figure 23 est une vue schématique de la zone de contact d'un autre mode de réalisation particulier de la tête magnétique objet de l'invention.
- la figure 24 est une vue de dessus schématique d'un exemple de tête magnétique conforme à l'invention,

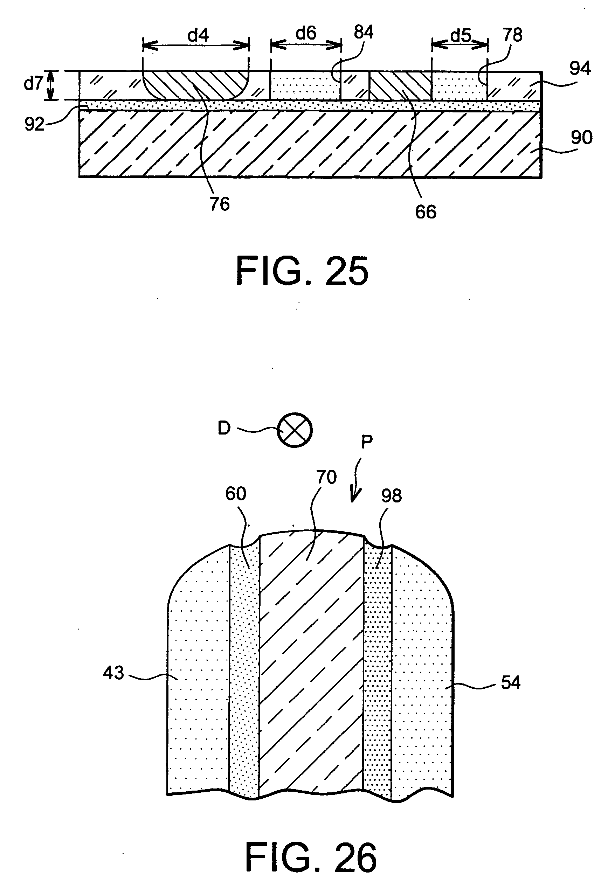

- la figure 25 est une vue en coupe schématique de cet exemple avant la fabrication des solénoïdes de cette tête magnétique, et
- la figure 26, illustre schématiquement un autre exemple de tête magnétique conforme à l'invention.

### EXPOSÉ DÉTAILLÉ DE MODES DE RÉALISATION PARTICULIERS

Dans ce qui suit, les matériaux sont donnés à titre d'exemples.

La figure 13 est une vue schématique d'une tête magnétique intégrée conforme à l'invention en cours de fabrication.

La structure 58 en couche mince, représentée sur cette figure, est vue sur la tranche d'une puce (en anglais "chip") comportant la tête en cours de fabrication ou sur la tranche d'une plaque (en anglais "wafer") comportant un grand nombre de telles têtes magnétiques en cours de fabrication de façon collective.

La structure 58 est une vue au niveau de la face de lecture et/ou d'écriture de la tête magnétique, face destinée à être en contact avec un support d'enregistrement magnétique (face 17, figure 2).

La structure 58 est formée sur une couche mince 60 de silice, servant de couche d'arrêt de gravure et formée sur un substrat 62, par exemple en silicium ou en un matériau résistant à l'usure (R2).

Entre le plan P1 de la surface supérieure de la couche 60 en silice et un autre plan P2 parallèle à P1, au niveau de la face de lecture et/ou d'écriture et au voisinage de cette face, la structure 58 comprend une première pièce polaire 64 et une deuxième pièce polaire 66 qui sont séparées par un entrefer azimuté 68 en silice, et un matériau 70 résistant à l'usure (R1), par exemple plus dur que le silicium, de part et d'autre des pièces polaires 64 et 66.

Ce matériau 70 est par exemple de l'alumine ou de la silice.

La structure de la figure 13 est fabriquée en un grand nombre d'exemplaires sur une plaque ("wafer") de silicium ou de SOI de type silicium sur matériau résistant à l'usure référencé 62 ou 72 qui est vue de dessus sur la figure 14. La référence 74 représente un chemin de découpe de la puce contenant la structure de la tête magnétique en cours de fabrication. La figure 13 correspond à la coupe D-D de la figure 14.

Pour chaque puce on fabrique d'abord les deux pièces polaires 64 et 66 séparées par l'entrefer 68 ainsi qu'un élément 76 formant la fermeture arrière du circuit magnétique de la tête magnétique correspondant à cette puce.

On grave ensuite un caisson 78 dans le silicium de la plaque, autour des pièces polaires 64 et 66, comme le montre la vue de dessus de la figure 14. On remplit ensuite ce caisson du matériau 70 résistant à l'usure (figure 15) au moyen d'un dépôt approprié du matériau.

Ce matériau est ensuite planarisé pour en éliminer le surplus (et obtenir la surface plane P2 de la figure 13).

On complète ensuite le circuit magnétique 77 de la tête magnétique (figure 16) de manière à fermer ce circuit (dont on avait déjà formé les pièces polaires et l'élément de fermeture arrière) et l'on forme les bobinages 78 de la tête magnétique.

On découpe ensuite la puce 80 et l'on met en forme cette puce comme on le voit sur la figure 16. Ainsi le matériau 70 résistant à l'usure se retrouve autour des pièces polaires, sur la face d'écriture et/ou de lecture 82 de la tête magnétique.

En ce qui concerne la fabrication des pièces polaires 64 et 66 séparées par l'entrefer 68 et la fabrication de l'élément 76, la fermeture du circuit magnétique 77 et la fabrication des bobinages 78, on se reportera aux figures 3 à 11 et à la description associée.

Dans l'exemple des figures 17 et 18, on considère l'utilisation de silice en tant que matériau 70 résistant à l'usure. Dans ce cas, les opérations de gravure du silicium autour des pièces polaires 64 et 66, de dépôt de silice dans le caisson 78 (figure 14) et de planarisation de la silice peuvent être réalisées en même temps que les opérations correspondantes, relative au caisson de bobinage inférieur 84 que l'on voit sur la figure 17.

Il convient de noter que cette technique présente l'avantage de résoudre le problème de l'usure sans pour autant rajouter des étapes technologiques.

Plus précisément, comme on le voit sur la figure 17, on a en outre gravé, sur la plaque 72 (figure 14), à l'intérieur de chaque chemin de découpe 74, une zone 84 appelée "caisson de bobinage inférieur" qui est nécessaire pour implanter le niveau inférieur des conducteurs des bobinages, ces conducteurs étant par exemple en cuivre.

Ce caisson de bobinage inférieur 84, qui n'est pas mentionné dans la description des figures 14 à 16 et qui n'est pas représenté sur ces figures, est ainsi formé en plus des pièces polaires séparées par l'entrefer et de l'élément de fermeture arrière du circuit magnétique.

Les caissons 78 et 84 sont gravés en même temps dans le silicium de la plaque 72. Ensuite, on dépose de la silice 86 dans le caisson de bobinage inférieur 84(figure 18). On dépose aussi le matériau 70 résistant à l'usure dans le caisson 78 qui entoure les pièces polaires. Si ce matériau 70 est également de la silice les deux dépôts sont formés en même temps après quoi ils sont planarisés (planarisation de la plaque entière 72) .

On précise que l'on implante ensuite le niveau inférieur de bobinage en cuivre dans la silice 86 qui remplit le caisson 84.

Après avoir complété et fermé le circuit magnétique et formé les solénoïdes correspondants, on découpe chaque puce et on la met en forme comme on l'a vu plus haut.

Le matériau 70 résistant à l'usure n'est pas nécessairement la silice : on a vu que l'on pouvait aussi utiliser l'alumine par exemple.

Les figures 20, 21 et 22 sont des vues en coupe schématiques qui illustrent des étapes de fabrication d'une tête magnétique conforme à l'invention et correspondant à cette possibilité. La figure 19 est une vue de dessus schématique montrant cette tête en cours de fabrication et les figures 20 à 22 correspondent à la coupe E-E de figure 19.

Sur cette figure 19 on voit, comme précédemment, le chemin de découpe 74 de la puce contenant la tête magnétique. On voit aussi les deux pièces polaires 64 et 66, l'entrefer 68 séparant ces pièces polaires, la fermeture arrière 76 du circuit magnétique correspondant, le caisson de bobinage inférieur correspondant 84 et le caisson 78 que l'on forme, comme on a vu, autour des pièces polaires 64 et 66.

Dans le cas des figures 19 à 22, on utilise la couche isolante d'une structure SOI (silicium sur isolant) pour arrêter les gravures. Les étapes de dépôt et de planarisation se déroulent de la même façon que précédemment.

Plus précisément, on voit sur la figure 20 un substrat 90 en silicium, sur lequel est formée une couche mince 92 de silice, et une couche mince 94 de silicium monocristallin, qui est formée sur cette couche de silice 92.

On voit aussi la pièce polaire 66 et la fermeture arrière de circuit magnétique 76. On voit en outre le caisson de bobinage inférieur 84 et le caisson 78 formé autour des pièces polaires, au niveau de la zone de contact ou zone de frottement sur le support (par exemple la bande) d'enregistrement magnétique. Les caissons ont été gravés dans le silicium de la couche mince 94 et la couche de silice 92 sert de couche d'arrêt de gravure.

La figure 21 montre montre le remplissage du caisson 78 par un matériau 70 résistant à l'usure, par exemple la silice ou l'alumine, et le remplissage du caisson 84 par la silice 86. La figure 22 montre ce matériau 70 et la silice 86 après planarisation.

La figure 23 est une vue schématique d'une autre tête magnétique conforme à l'invention en cours de fabrication.

Plus précisément, cette autre tête magnétique comporte une structure que l'on voit sur la tranche, sensiblement au niveau de la face de lecture et/ou d'écriture de la tête.

La structure de la figure 23 est à comparer à celle de la figure 13 et constitue une étape plus avancée dans le procédé de fabrication.

On la comparera aussi à la structure connue de la figure 12A à laquelle elle apporte, bien entendu, des améliorations.

En fait, la structure que l'on voit sur cette figure 23 cumule les avantages procurés par la présente invention et par la technique divulguée par le document (2).

Cette structure de la figure 23 permet de résoudre tous les problèmes d'usure du silicium en remplaçant partout ce dernier au niveau de la face de lecture et/ou d'écriture.

On voit sur la figure 23 les pièces polaires 64 et 66 séparées par l'entrefer azimuté 68 en silice et formées sur une couche mince de silice 60, elle-même formée sur un substrat de silicium. On voit également, de part et d'autre des pièces polaires, le matériau résistant à l'usure 70, comme on l'a expliqué dans la description de la figure 13, et une couche de silice 96 qui s'étend au dessus de ce matériau 70, et aussi entre ce dernier et la pièce polaire 64.

On fixe ensuite sur la couche de silice 96 une couche 98 contenant la partie supérieure du circuit magnétique et le bobinage qui l'entoure.

On fixe aussi le substrat 54, résistant à l'usure, sur cette couche 98. On enlève alors le substrat de silicium, ce qui fait apparaître la couche de silice 60. Puis on fixe le substrat 43 résistant à l'usure sur la couche de silice 60. Ces substrats 43 et 54 sont par exemple en Al₂O₃-TiC, en CaTiO₃ ou en ZrO₂.

On donne maintenant, à titre purement indicatif et nullement limitatif, un exemple numérique relatif à une tête magnétique conforme à l'invention. La figure 24 est une vue de dessus schématique de cette tête magnétique tandis que la figure 25 est une vue en coupe schématique d'un empilement de couches, que l'on obtient en cours de fabrication de cette tête magnétique, avant la formation des solénoïdes de cette dernière.

La figure 24 (respectivement 25) est à comparer à la figure 16 (respectivement 22) et, sur les figures 16 et 24 (respectivement 22 et 25), les mêmes éléments ont les mêmes références.

Dans l'exemple de la figure 24, la longueur d1 de l'entrefer 68 (vu de dessus), vaut environ 10µm, la longueur d3 de la fermeture arrière 76 du circuit magnétique (vu de dessus) est de l'ordre de 250µm et la largeur d2 du caisson de matériau 70 est de l'ordre de 1mm.

Dans l'empilement de la figure 25, la largeur d4 de la fermeture arrière 76 du circuit magnétique vaut environ 100µm, la largeur d5 du caisson 78 vaut environ 50µm, la largeur d6 du caisson 84 vaut environ 200µm et l'épaisseur d7 de la couche 94 vaut environ 4µm.

La figure 26 est une vue schématique d'un autre exemple de tête magnétique conforme à l'invention. On voit le profil P de cette tête magnétique et l'on a également indiqué la direction D de défilement d'une bande magnétique avec laquelle on veut utiliser la tête magnétique.

Dans le sens transversal au défilement de la bande, trois matériaux de duretés différentes sont situés de part et d'autre de la partie active de la tête magnétique (c'est-à-dire les pièces polaires plus tous les éléments fonctionnels de cette tête).

Plus précisément, une première couche 70 encadre la partie active de la tête (cette partie active est insérée au milieu de la couche 70) et le matériau dont est faite cette couche 70 a la dureté la plus élevée.

Deux autre couches 60 et 98 encadrent la couche 70 et sont faites du matériau ayant la dureté la plus faible.

Deux autres 43 et 54 sont situées à l'extérieur du "sandwich" ainsi obtenu (dans le sens transversal au défilement de la bande). Elle encadrent les deux couches 60 et 98 et sont faites d'un matériau dont la dureté est intermédiaire entre celle du matériau de la couche 70 et celle du matériau des couches 60 et 98.

La structure que l'on voit sur la figure 26 est une structure du genre "trimaran" ayant une forme utile pour un bon contact tête/bande pendant toute la durée de vie de la tête.

Les exemples que l'on a donnés de l'invention concernent des têtes magnétiques comportant un entrefer azimuté. Cependant, l'invention ne se limite pas à de tels exemples : on peut également fabriquer, conformément à l'invention, des têtes magnétiques comportant un entrefer droit.

La technique de la présente invention offre l'avantage de pouvoir choisir l'angle d'azimut en choisissant l'orientation cristalline du silicium. Un autre substrat monocristallin que le silicium pourrait éventuellement être utilisé.

## Revendications

1. Tête magnétique intégrée utilisable pour l'enregistrement magnétique hélicoïdal, cette tête magnétique étant planarisée et comprenant une structure en couche mince contenant, dans la tranche de la structure constituant la face de lecture et/ou d'écriture de la tête magnétique, deux pièces polaires (64, 66) séparées par un entrefer azimuté (68) et en alignement longitudinal, et deux zones (70) qui sont faites d'un premier matériau plus résistant à l'usure que le silicium et qui encadrent ces pièces polaires dans le sens de défilement d'un support d'enregistrement magnétique et ce premier matériau avec ces pièces polaires est planarisé.

2. Tête magnétique intégrée selon la revendication 1, dans laquelle les pièces polaires sont contenues entre deux plans parallèles (P1, P2) de la stucture en couche mince, cette structure comprenant au moins entre ces deux plans parallèles, de part et d'autre des pièces polaires, dans le sens de défilement du support d'enregistrement magnétique, un premier matériau plus résistant à l'usure que le silicium.

3. Tête magnétique intégrée comprenant une structure en couche mince selon l'une quelconque des revendications 1 et 2, cette structure en couche mince contenant, dans la tranche de la structure constituant la face de lecture et/ou d'écriture de la tête magnétique, deux pièces polaires (64, 66) séparées par un entrefer azimuté (68) et en alignement longitudinal, ces pièces polaires étant contenues, dans le sens transversal par rapport à la structure, entre deux plans parallèles (P1, P2) de la structure en couche mince, cette tête magnétique étant **caractérisée en ce qu'**elle comprend, au moins dans cette tranche, entre les deux plans parallèles, de part et d'autre des pièces polaires séparées par l'entrefer, un premier matériau (70) résistant à l'usure, afin de renforcer la résistance à l'usure de la face de lecture et/ou d'écriture.

4. Tête magnétique intégrée selon l'une quelconque des revendications 1 à 3, comprenant en outre deux couches (43, 54) d'un deuxième matériau résistant à l'usure, les deux couches encadrant la structure en couche mince, pour renforcer davantage la résistance à l'usure de la face de lecture et/ou d'écriture.

5. Tête magnétique intégrée selon la revendication 4, comprenant également un élément (98) en forme de couche contenant des circuits complémentaires de la tête magnétique, entre la structure en couche mince et l'une (54) des deux couches du deuxième matériau résistant à l'usure.

6. Tête magnétique intégrée selon l'une quelconque des revendications 4 et 5, dans laquelle le deuxième matériau résistant à l'usure est choisi parmi Al₂O₃-SiC, Al₂O₃-TiC, CaTiO₃, ZrO₂, le saphir, SiC, Si₃N₄.

7. Tête magnétique intégrée selon l'une quelconque des revendications 1 à 6, dans laquelle le premier matériau (70) résistant à l'usure est choisi parmi Al₂O₃ et SiO₂. magnétique hélicoïdal

8. Tête magnétique intégrée selon l'une quelconque des revendications 1 à 3, comprenant une couche principale (70) qui encadre la partie active de la tête magnétique, deux couches intermédiaires (60, 98) encadrant cette couche principale (70) et deux couches auxiliaires (43, 54) qui sont faites d'un matériau moins résistant à l'usure que le matériau de la couche principale (70) et qui encadrent les deux couches intermédiaires (60, 98), ces couches intermédiaires (60, 98) étant faites d'un matériau moins résistant à l'usure que le matériau des couches auxiliaires (43, 54), de manière à former une structure ayant une forme apte à permettre un bon contact de la tête avec un support d'enregistrement magnétique pendant toute la durée de vie de cette tête.

9. Procédé de fabrication d'une tête magnétique intégrée planarisée, utilisable pour l'enregistrement magnétique hélicoïdal, dans lequel on forme une structure en couche mince contenant, dans la tranche de la structure constituant la face de lecture et/ou d'écriture de la tête magnétique, deux pièces polaires (64, 66) séparées par un entrefer azimuté (68) et en alignement longitudinal, et deux zones (70) qui sont faites d'un premier matériau plus résistant à l'usure que le silicium et qui encadrent ces pièces polaires dans le sens de défilement d'un support d'enregistrement magnétique et ce premier matériau avec ces pièces polaires est planarisé.

10. Procédé selon la revendication 9, dans lequel les pièces polaires sont contenues entre deux plans parallèles (P1, P2) de la stucture en couche mince, cette structure comprenant au moins entre ces deux plans parallèles, et ce premier matériau avec ces pièce polaires est planarisé de part et d'autre des pièces polaires dans le sens de défilement du support d'enregistrement magnétique, un premier matériau plus résistant à l'usure que le silicium.

11. Procédé de fabrication d'au moins une tête magnétique intégrée selon l'une quelconque des revendications 1 à 3, ce procédé comprenant les étapes suivantes :
- on forme un premier substrat comprenant les première et deuxième pièces polaires (64, 66), l'entrefer (68) azimuté, séparant ces première et deuxième pièces polaires, et un élément (76) formant une fermeture arrière de circuit magnétique,
- on forme un premier caisson (78) dans le substrat, autour des première et deuxième pièces polaires séparées par l'entrefer,
- on remplit ce premier caisson du premier matériau (70) plus résistant à l'usure,
- on planarise ce premier matériau résistant à l'usure,
- on complète lé circuit magnétique (77) de manière à obtenir un circuit magnétique fermé, incorporant les première et deuxième pièces polaires, l'entrefer et l'élément formant la fermeture arrière de circuit magnétique,
- on forme les bobinages (78) de la tête magnétique, et
- on découpe transversalement la tête magnétique de manière à la séparer du premier substrat et faire apparaître la face de lecture et/ou d'écriture (82) de la tête magnétique.

12. Procédé selon la revendication 11, dans lequel le premier matériau (70) résistant à l'usure est du SiO₂.

13. Procédé selon la revendication 12, dans lequel
- on forme simultanément, dans le premier substrat, le premier caisson (78) et un deuxième caisson (84) permettant la formation des bobinages de la tête magnétique,
- on remplit simultanément ces premier et deuxième caissons avec le premier matériau (70) résistant à l'usure et
- on planarise simultanément le premier matériau remplissant le premier caisson et le premier matériau remplissant le deuxième caisson.

14. Procédé selon l'une quelconque des revendications 11 et 12, dans lequel le premier substrat comprend un substrat auxiliaire (90), une couche d'arrêt de gravure(92) sur ce substrat auxiliaire et une couche mince (94) d'un matériau monocristallin, d'orientation appropriée, sur la couche d'arrêt de gravure, et l'on forme dans cette couche mince, par gravure de cette dernière, les première et deuxième pièces polaires, l'entrefer ainsi que le premier caisson.

15. Procédé selon la revendication 14, dans lequel le substrat auxiliaire (90) est en silicium, la couche d'arrêt (92) en SiO₂ et la couche mince (94) en silicium monocristallin.

16. Procédé selon l'une quelconque des revendications 14 et 15, dans lequel
- on élimine le substrat auxiliaire pour faire apparaître la couche d'arrêt de gravure,
- on fixe, sur la face libre de la couche mince, une autre couche (98) permettant de compléter la formation des bobinages de la tête magnétique,
- on fixe, respectivement sur cette autre couche et sur la couche d'arrêt de gravure, des première et deuxième couches (43, 54) d'un deuxième matériau plus résistant à l'usure que le silicium, et
- on découpe ensuite transversalement la tête magnétique.

## Claims

1. Integrated magnetic head usable for helical magnetic recording, said magnetic head being planarized and comprising a thin film structure containing, in the portion of the structure constituting the reading and/or writing face of the magnetic head, two polar parts (64, 66) separated by an azimuthal gap (68) and in longitudinal alignment, two zones (70) made from a first material more resistant to wear than silicon and which surrounds said polar parts in the feed direction of a magnetic recording support and said first material with said polar parts being planarized.

2. Integrated magnetic head according to claim 1, in which the polar parts are contained between two parallel planes (P1, P2) of the thin layer structure, this structure comprising at least between these two parallel planes, on either side of the polar parts, in the direction of the feed of the magnetic recording medium, a first material that has higher wear resistance than silicon.

3. Integrated magnetic head comprising a thin layer structure according to any of claims 1 or 2, this thin layer structure containing, in the portion of the structure constituting the reading and/or writing face of the magnetic head, two polar parts (64, 66) separated by an azimuthal gap (68) and aligned longitudinally, these polar parts being contained, transversally with respect to the structure, between two parallel planes (P1, P2) of the thin layer structure, this magnetic head being **characterized in that** it comprises, at least in this portion, between the two parallel planes, on either side of the polar parts separated by the gap, a first wear resistant material (70), in order to reinforce the wear resistance of the reading and/or writing face.

4. Integrated magnetic head according to any of claims 1 to 3, also comprising two layers (43, 54) of a second wear resistant material, the two layers surrounding the thin layer structure in order to increase further the wear resistance of the reading and/or writing face.

5. Integrated magnetic head according to any of claims 1 to 4, also comprising an element (98) in the form of a layer containing additional circuits of the magnetic head between the thin layer structure and one (54) of the two layers of the second wear resistant material.

6. Integrated magnetic head according to either of claims 4 and 5, in which the second wear resistant material is chosen from Al₂O₃-SiC, Al₂O₃-TiC, CaTiO3, sapphire, SiC, Si₃N₄.

7. Integrated magnetic head according to any of claims 1 to 6, in which the first wear resistant material (70) is chosen from Al₂O₃ and SiO₂.

8. Integrated magnetic head according to any of claims 1 to 3, comprising a main layer (70) which surrounds the active part of the magnetic head, two intermediate layers (60, 98) surrounding this main layer (70) and two auxiliary layers (43, 54) that are made from a material that has lower wear resistance than the material of the main layer (70) and which surround the two intermediate layers (60, 98), these intermediate layers being made from a material with a lower wear resistance than the material of the auxiliary layers (43, 54), so as to form a structure capable of permitting a good contact between the head and a magnetic recording medium for the entire life of this head.

9. Manufacturing process of an integrated polarized, magnetic head usable for helical magnetic recording, in which a thin layer structure is formed containing, in the portion of the structure constituting the reading and/or writing face of the magnetic head, two polar parts (64, 66) separated by an azimuthal gap (68) and longitudinally aligned, and two zones (17) made from a first material more resistant to wear than silicon and which surround said polar parts in the feed direction of a magnetic recording support and said first material with said polar parts is planarized.

10. Process according to claim 9, in which the polar parts are contained between two parallel planes (P1, P2) of the thin layer structure, this structure comprising at least between these two parallel planes, on either side of the polar parts, in the direction of feed of a magnetic recording medium, a first material that has higher wear resistance than silicon.

11. Manufacturing process of at least one integrated magnetic head according to any of claims 1 to 3, this process comprising the following steps:
- a first substrate is formed comprising the first and second polar parts (64, 66), the gap (68) being azimuthed, separating these first and second polar parts, and an element (76) forming a rear closure of the magnetic circuit,
- a first housing (78) is formed in a substrate, around the first and second polar parts separated by the gap,
- this first housing is filled with the first wear resistant material (70),
- this first wear resistant material is planarized,
- the magnetic circuit (77) is completed, in order to obtain a closed magnetic circuit, incorporating the first and second polar parts, the gap and the element forming the rear closure of the magnetic circuit,
- the coils (78) of the magnetic head are formed, and
- the magnetic head is cut transversally in order to separate it from the first substrate and reveal the reading and/or writing face (82) of the magnetic head.

12. Process according to claim 11, in which the first wear resistant material (70) is SiO₂.

13. Process according to claim 12, in which
- in the first substrate, the first housing (78) and a second housing (84) permitting the coils of the magnetic head to be formed, are formed simultaneously,
- these first and second housings are filled simultaneously with the first wear resistant material (70) and
- the first material filling the first housing and the first material filling the second housing are planarized simultaneously.

14. Process according to either of claims 11 and 12, in which the first substrate comprises an auxiliary substrate (90), an etching stop layer (92) on this auxiliary substrate and a thin layer (4) of a monocrystalline material of suitable orientation, on the etching stop layer, and the first and second polar parts, the gap and the first housing are formed in this thin layer by etching the latter.

15. Process according to claim 14, in which the auxiliary substrate (90) is made of silicon, the stop layer (92) is made of SiO₂, and the thin layer (94) is made of monocrystalline silicon.

16. Process according to either of claims 14 and 15, in which:
- the auxiliary substrate is eliminated to reveal the etching stop layer,
- on the free face of the thin layer, another layer (98) is fixed permitting the formation of the coils of the magnetic head to be completed,
- on this other layer and on the etching stop layer, first and second layers (43, 54) of a second material that is more wear resistant than silicon are respectively fixed, and
- the magnetic head is then cut transversally.

## Patentansprüche

1. Integrierter Magnetkopf, verwendbar zur spiralförmigen magnetischen Aufzeichnung, wobei dieser Kopf planarisiert ist und eine Dünnschichtstruktur, die in der Schnittfläche der Struktur, welche die Lese- und/oder Schreibfläche des Magnetkopfs bildet, zwei Polschuhe (64, 66), getrennt durch einen azimutierten bzw. justierten und longitudinal ausgerichteten Spalt (68), und zwei Zonen (70) aus einem ersten Material umfasst, das verschleißfester als Silicium ist und das diese Polschuhe in der Durchlaufrichtung eines Magnetaufzeichungsträgers umrahmt, und dieses erste Material mit diesen Polschuhen planarisiert ist.

2. Integrierter Magnetkopf nach Anspruch 1, bei dem die Polschuhe zwischen zwei parallelen Ebenen (P1, P2) der Dünnschichtstruktur enthalten sind, wobei diese Struktur wenigstens zwischen diesen beiden parallelen Ebenen, beiderseits der Polschuhe, in der Durchlaufrichtung des Magnetaufzeichnungsträgers, ein erste Material umfasst, das verschleißfester als Silicium ist.

3. Integrierter Magnetkopf, eine Dünnschichtstruktur nach einem der Ansprüche 1 und 2 umfassend, wobei diese Dünnschichtstruktur in der Schnittfläche der Struktur, die die Lese- und/oder Schreibfläche des Magnetkopfs bildet, zwei Polschuhe (64, 66) umfasst, getrennt durch einen azimutierten bzw. justierten und longitudinal ausgerichteten Spalt (68), und diese Polschuhe in der in Bezug auf die Struktur transversalen Richtung zwischen zwei parallelen Ebenen (P1, P2) der Dünnschichtstruktur enthalten sind,
wobei dieser Magnetkopf **dadurch gekennzeichnet ist, dass** er wenigstens in dieser Oberflächenschicht, zwischen den beiden parallelen Ebenen, beiderseits der durch den Spalt getrennten Polschuhe, ein erstes verschleißfestes Material (70) umfasst, um die Verschleißfestigkeit der Lese- und/oder Schreibseite zu erhöhen.

4. Integrierter Magnetkopf nach einem der Ansprüche 1 bis 3, der außerdem zwei Schichten (43, 54) aus einem zweiten verschleißfesten Material umfasst, wobei diese beiden Schichten die Dünnschichtstruktur umrahmen, um die Verschleißfestigkeit der Lese- und/oder Schreibfläche noch mehr zu verstärken.

5. Integrierter Magnetkopf nach Anspruch 4, der zwischen der Dünnschichtstruktur und einer (54) der beiden Schichten des zweiten verschleißfesten Materials auch ein schichtförmiges Element (98) umfasst, das komplementäre Kreise des Magnetkopfs enthält.

6. Integrierter Magnetkopf nach einem der Ansprüche 4 und 5, bei dem das zweite verschleißfeste Material ausgewählt wird unter Al₂O₃-SiC, Al₂O₃-TiC, CaTiO₃, ZrO₂, Saphir, SiC, S₁₃N₄.

7. Integrierter Magnetkopf nach einem der Ansprüche 1 bis 6, bei dem das erste verschleißfeste Material (70) ausgewählt wird zwischen Al₂O₃ und SiO₂.

8. Integrierter Magnetkopf nach einem der Ansprüche 1 bis 3, mit einer Hauptschicht (70), die den aktiven Teil des Magnetkopfs umrahmt, zwei Zwischenschichten (60, 98), die diese Hauptschicht (70) umrahmen, und zwei Zusatzschichten (43, 54), die aus einem weniger verschleißfesten Material als das Material der Hauptschicht (70) sind und die die beiden Zwischenschichten (60, 98) umrahmen, wobei diese Zwischenschichten (60, 98) aus einem weniger verschleißfesten Material als das Material der Zusatzschichten (43, 54) sind, um eine Struktur mit einer Form auszubilden, die während der gesamten Lebensdauer des Magnetkopfs einen guten Kontakt dieses Magnetkopfs mit einem Magnetaufzeichnungsträger ermöglicht.

9. Verfahren zur Herstellung eines zur spiralförmigen magnetischen Aufzeichnung verwendbaren planarisierten integrierten Magnetkopfs, in dem man eine Dünnschichtstruktur ausbildet, die in der Schnittfläche der Struktur, die die Lese- und/oder Schreibfläche des Magnetkopfs bildet, zwei Polschuhe (64, 66), getrennt durch einen azimutierten bzw. justierten und longitudinal ausgerichteten Spalt (68), und zwei Zonen (70) aus einem ersten Material umfasst, das verschleißfester als Silicium ist und das diese Polschuhe in der Durchlaufrichtung eines Magnetaufzeichungsträgers umrahmt, und dieses erste Material mit diesen Polschuhen planarisiert ist.

10. Verfahren nach Anspruch 9, in dem die Polschuhe zwischen zwei parallelen Ebenen (P1, P2) der Dünnschichtstruktur enthalten sind, wobei diese Struktur wenigstens zwischen diesen beiden parallelen Ebenen, beiderseits der Polschuhe, in der Durchlaufrichtung des Magnetaufzeichnungsträgers, ein erste Material umfasst, das verschleißfester als Silicium ist.

11. Verfahren zur Herstellung wenigstens eines integrierten Magnetkopfs nach einem der Ansprüche 1 bis 3, wobei dieses Verfahren die folgenden Schritte umfasst:
- man bildet ein erstes Substrat mit dem ersten und dem zweiten Polschuh (64, 66), dem den ersten und zweiten Polschuh trennenden azimutierten bzw. justierten Spalt (68) und einem hinteren Magnetkreis-Schließelement (76);
- man bildet in dem Substrat eine erste Vertiefung (78), um den durch den Spalt getrennten ersten und zweiten Polschuh herum,
- man füllt diese erste Vertiefung mit dem ersten verschleißfesteren Material (70);
- man planarisiert dieses erste verschleißfestere Material,
- man komplettiert diesen Magnetkreis (77) so, dass man einen geschlossenen Magnetkreis erhält, der den ersten und zweiten Polschuh, den Spalt und das hintere Magnetkreis-Schließelement umfasst;
- man bildet die Windungen (78) des Magnetkopfes, und
- man schneidet den Magnetkopf transversal zu, um ihn von dem ersten Substrat zu trennen und die Lese- und/oder Schreibfläche (82) des Magnetkopfs erscheinen zu lassen.

12. Verfahren nach Anspruch 11, bei dem das erste verschleißfeste Material (70) SiO₂ ist.

13. Verfahren nach Anspruch 12, bei dem
- man simultan in dem ersten Substrat die erste Vertiefung (78) und eine zweite Vertiefung (84) bildet, die die Ausbildung von Magnetkopfwindungen ermöglichen;
- man diese erste und zweite Vertiefung gleichzeitig mit dem ersten verschleißfesten Material (70) füllt und
- man gleichzeitig das die erste und die zweite Vertiefung füllende verschleißfeste erste Material planarisiert.

14. Verfahren nach einem der Ansprüche 11 und 12, bei dem das erste Substrat ein Zusatzsubstrat (90), eine Ätzsperrschicht (92) auf diesem Zusatzsubstrat und auf der Ätzsperrschicht eine dünne Schicht (94) aus einem monokristallinen Material mit passender Orientierung umfasst, und man in dieser dünnen Schicht, durch Ätzung dieser letzteren, den ersten und zweiten Polschuh, den Spalt sowie die erste Vertiefung ausbildet.

15. Verfahren nach Anspruch 14, bei dem das Zusatzsubstrat (90) aus Silicium, die Sperrschicht (92) aus SiO₂ und die dünne Schicht (94) aus monokristallinem Silicium ist.

16. Verfahren nach einem der Ansprüche 14 und 15, bei dem
- man das Zusatzsubstrat eliminiert, so dass die Ätzsperrschicht erscheint,
- man auf der freien Fläche der dünnen Schicht eine andere Schicht (98) fixiert, die ermöglicht, die Bildung der Windungen des Magnetkopfs zu komplettieren,
- man jeweils auf dieser Schicht und auf der Ätzsperrschicht eine erste und zweite Schicht (43, 54) eines zweiten Materials abscheidet, das verschleißfester als Silicium ist, und
- man den Magnetkopf anschließend transversal zuschneidet.
